Europäisches Patentamt

European Patent Office

Office européen des brevets

(19)

(11) Publication number: **0 082 141**
**B1**

(12) **EUROPEAN PATENT SPECIFICATION**

(45) Date of publication of patent specification: 28.08.85    (51) Int. Cl.⁴: **F 01 N 3/20,** F 01 N 3/36

(21) Application number: 81902088.4

(22) Date of filing: 22.06.81

(86) International application number:
PCT/US81/00845

(87) International publication number:
WO 83/00057 06.01.83 Gazette 83/01

(54) **AMMONIA/FUEL RATIO CONTROL SYSTEM FOR REDUCING NITROGEN OXIDE EMISSIONS.**

(43) Date of publication of application:
29.06.83 Bulletin 83/26

(45) Publication of the grant of the patent:
28.08.85 Bulletin 85/35

(84) Designated Contracting States:
DE FR GB

(56) References cited:
FR-A-1 128 505
JP-A-52 048 722
JP-A-55 093 917
US-A-3 599 427
US-A-3 696 618
US-A-3 846 981
US-A-3 900 554
US-A-4 188 364

(73) Proprietor: **CATERPILLAR TRACTOR CO.**
**100 Northeast Adams Street**
**Peoria Illinois 61629 (US)**

(72) Inventor: **GLADDEN, John R.**
**136 Jo Street, Rural Route 4**
**Metamora, IL 61548 (US)**

(74) Representative: Jackson, Peter Arthur et al
GILL JENNINGS & EVERY 53-64 Chancery Lane
London WC2A 1HN (GB)

Courier Press, Leamington Spa, England.

## Description

This invention relates generally to a control system for reducing nitrogen oxides in the combusted gas stream from an internal combustion engine combustion chamber and more particularly to a control system which treats the combusted gas stream with ammonia and a reactor.

It is known in the art to introduce small quantities of ammonia, $NH_3$, into a combusted gas stream containing nitrogen oxides such as nitric oxide, NO, and nitrogen dioxide, $NO_2$, in order to form molecular nitrogen gas, $N_2$, and water vapor, $H_2O$, thereby reducing the concentration of noxious nitrogen oxides.

In US—A—3,900,554 issued to Lyon, a method of reducing nitric oxide is disclosed wherein ammonia is introduced into a combusted gas stream in a specified mole ratio to the amount of nitric oxide contained in the combusted gas stream. In order for the reaction to occur, this method specifies that the combusted gas stream must be at an elevated temperature of between 704 to 1073°C. However, Lyon does not teach or suggest that his method is applicable to a diesel engine since a diesel engine's combusted gas stream temperature typically ranges from 100 to 600°C, depending on the load, thus never attaining the higher temperature range required by Lyon in order for the ammonia to react with the nitric oxide. Further, the amount of ammonia delivered to the combusted gas stream may be continually either inadequate or excessive if it is governed by analysis of the combusted gas stream. Combusted gas analysis by a conventional nitrogen oxide sensor involves a significant time lag before any charge in the amount of nitrogen oxides produced is detected and the corresponding amount of ammonia delivered can be combusted gas stream varies according to the engine load which can more rapidly change.

Another approach to the reduction of nitrogen oxides is disclosed in US—A—3,846,981 issued to Paczkowski in which the combusted gas stream is heated by an afterburner which is maintained within a temperature range of 704 to 1038°C. The heated combusted gas stream is thereafter cooled by ambient air and then contacted with a gaseous nitrogen-containing compound. The amount of nitrogen-containing compound contacting the combusted gas stream is regulated in response to exhaust gas temperature or velocity, operating motor vacuum, or in response to a nitrogen oxide sensor in the combusted gas stream. However, Paczkowski does not teach or suggest what quantity of nitrogen-containing compound should contact the combusted gas stream.

In order to enable ammonia to react with nitrogen oxides at typical combusted gas stream temperatures of diesel or spark-ignited engine a method (hereinafter referred to as of the kind described) is disclosed in US—A—4,188,364, the method comprising the steps of conducting the combusted gas stream to a reactor; and metering ammonia to the combusted gas stream at a location between the combustion chamber and the reactor. The use of a reactor particularly a catalytic reactor, enables the nitrogen oxides and ammonia to be adsorbed on the catalyst bed where the reaction can occur at the normal combusted gas stream temperatures rather than at the elevated temperature range required by the Lyon or Paczkowski patents. However, in this prior method the ammonia is supplied in proportion to the amount of nitric oxide sensed in the combusted gas stream and a conventional nitrogen oxide sensor has the advantages of relatively slow response as well as high cost and even unreliability if the sensor is not frequently serviced. Further, the reactor temperature varies according to engine load such that the reactor may at times be either too cold or too hot for the ammonia to react on the catalyst bed and reduce nitrogen oxides. Thus the supply of ammonia to the reactor may at times be wasted.

In summary, the above disclosures do not teach or suggest a way of reliably and instantaneously metering only the required amount of ammonia to the combusted gas stream in order to efficiently reduce the amounts of noxious nitrogen oxides while also conserving the supply of ammonia.

In accordance with the present invention, a method of the kind described is characterised in that the ammonia is metered in a preselected proportion to the fuel mass flow rate supplied to the engine combustion chamber as determined from engine speed and a setting of a fuel pump quantity control means.

The invention also includes an emission control system for carrying out the new method of reducing the oxides of nitrogen contained in a combusted gas stream from a combustion chamber of an internal combustion engine the system comprising a reactor; a conduit connected between the combustion chamber and the reactor; and means for metering the ammonia to the conduit; characterised in that the metering means is responsive to engine speed and to a setting of a fuel pump quantity control means of the engine.

In the accompanying drawings:

Fig. 1 is a graph plotting the amount of nitrogen oxides emitted by a typical diesel engine at various engine speeds versus the total fuel mass flow rate to the engine combustion chambers.

Fig. 2 is a graph plotting the amount of nitrogen oxides removed from a combusted gas stream by catalytic reaction with ammonia versus the temperature of the combusted gas stream in the reactor.

Fig. 3 is a diagrammatic view of one embodiment of the apparatus for practicing the method of this invention.

Fig. 4 is a diagrammatic view of another embodiment of the apparatus for practicing the method of this invention.

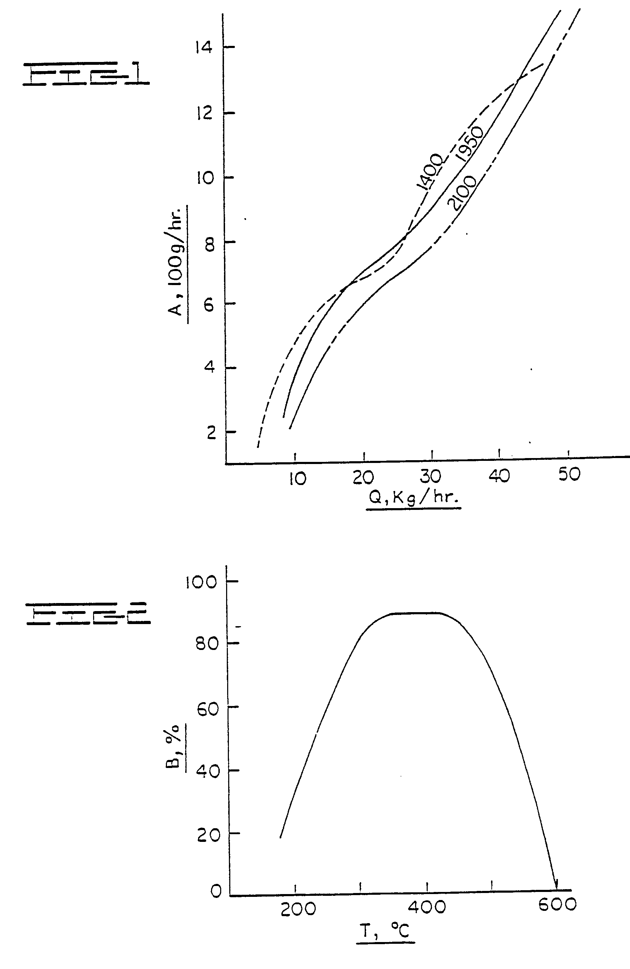

Referring to Fig. 1, I have experimentally determined that the amount of nitrogen oxides produced in a given diesel engine is fairly directly proportional to the total fuel mass flow rate supplied to the engine combustion chambers. Fig. 1 illustrates a particular diesel engine which is rated at 2100 rpm and whose total fuel mass flow rate, Q, and nitrogen oxide emissions, A, were monitored at varying loads while the engine was operating at 2100 rpm, 1950 rpm, and 1400 rpm. Fig. 1 shows that a substantially straight-line and directly proportional relationship between the amounts of nitrogen oxide emissions, A, and total fuel mass flow rate, Q, exists over a considerable speed range of the engine.

Moreover, I have determined that the amount of nitrogen oxides in the combusted gas stream from a combustion chamber of an engine can be reduced more efficiently by metering ammonia to the combusted gas stream in a preselected proportion to the fuel mass flow rate supplied to the combustion chamber. For optimum reduction of nitrogen oxides, I have determined that the ammonia should be metered in the amount between about 0.2 to 10% of the total fuel mass flow rate.

In order for the reaction between the ammonia and nitrogen oxides to occur, the ammonia is evenly dispersed throughout the combusted gas stream and the resulting unreacted gaseous mixture, normally within an exhaust temperature range of about 100 to 600°C, depending on engine load, is conducted to either a catalytic reactor or, alternatively, a thermal reactor. If a thermal reactor is chosen, it is maintained within the elevated reaction temperature range of about 700 to 1100°C which enables the ammonia and nitrogen oxides to spontaneously react.

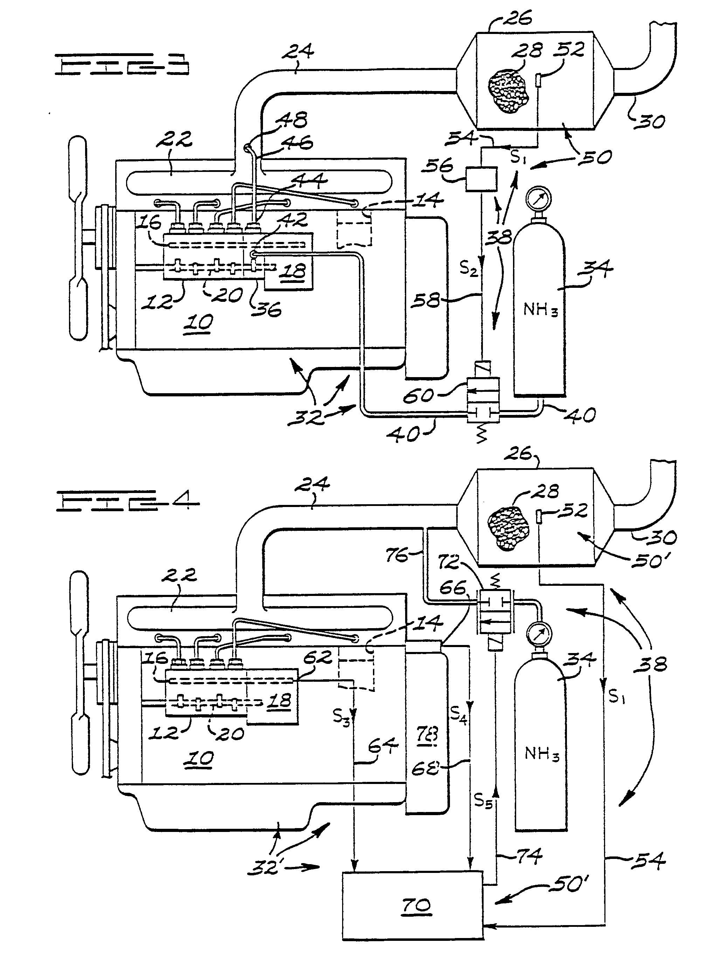

On the other hand, if a catalytic reactor is chosen, the catalyst adsorbs the ammonia and nitrogen oxides and facilitates the reaction at normal combusted gas stream temperatures without requiring the elevated reaction temperature. However, as Fig. 2 illustrates, the amount of nitrogen oxides removed by catalytic reaction with ammonia varies according to the temperature of the combusted gas stream within the catalytic reactor which in turn varies according to the engine load. In Fig. 2 the percentage of nitrogen oxide removal, B, is plotted against the temperature, T, of the combusted gas stream within a representative catalytic reactor, for example, a metal oxide catalytic reactor. At temperatures below about 100°C no significant nitrogen oxide removal is achieved and the ammonia passes through the exhaust system unreacted. Maximum reduction of nitrogen oxides, being in excess of 80%, is achieved when the temperature is between about 300 to 500°C. On the other hand, at temperatures above about 600°C the catalytic reactor actually produces additional nitrogen oxides from the ammonia. Generally, catalytic reactors exhibit a preferred temperature range of about 50 to 800°C below which the ammonia passes unreacted through the reactor and above which the ammonia reacts with oxygen to produce additional noxious nitric oxide. Consequently, the present invention is also directed at conserving the supply of ammonia such that it is not only accurately metered but supplied only when it is beneficial for the reduction of nitrogen oxides. Conservation of the ammonia supply is especially important in mobile engine applications where the capacity for carrying a supply of ammonia and the frequency of replenishment may be limited.

Referring more particularly to Fig. 3 and Fig. 4 wherein similar reference characters designate corresponding parts throughout both figures, there are shown two alternate embodiments of a nitrogen oxide control system for practicing the method of this invention.

In Fig. 3 the amount of ammonia metered is mechanically determined in proportion to the fuel mass flow rate. An engine generally indicated at 10, includes one or more conventional fuel injection pumps 12 which meter and pump fuel to the respective engine combustion chambers, such as the one shown schematically at 14, in an amount per unit time determined by the engine speed and the position of a conventional fuel pump rack 16 which are controlled by a conventional governor 18. The combustion chambers 14 are connected to an exhaust manifold 22 which is connected to or is integral with a common combusted gas stream conduit 24. The conduit 24 is connected to a reactor 26. The reactor may either be a conventional catalytic reactor or, alternatively, a conventional thermal reactor. If a catalytic reactor is used, suitable well known catalyst beds 28 for the catalytic reactor 26 would include, for example, the zeolite catalysts such as hydrogen exchanged mordenite zeolite, $H_8O_4(Al_2O_3)_4(SiO_2)_{40} \cdot 24H_2O$, the metal catalysts such as platinum, the metal oxide catalysts such as iron oxide or vanadium pentoxide, $V_2O_5$, on alumina support, or any of the known catalyst compositions described in U.S. 4,155,986 issued to Gladden on May 22, 1979 or U.S. 4,188,364 issued to Gladden on February 12, 1980. An exhaust stack 30 is connected to the reactor 26 for venting the combusted gas stream to atmosphere.

A means 32 is provided for reliably and instantaneously metering ammonia to the conduit 24 in a preselected proportion to the fuel mass flow rate supplied to the engine combustion chambers 14 and in response to the sensed temperature of the combusted gas stream in the reactor 26 being within a preselected range. The ammonia metering means 32 includes a reservoir or tank 34 of ammonia, an ammonia pump 36, and a means 38 for supplying the flow of ammonia to the ammonia pump 36 in response to the sensed temperature of the combusted gas stream in the reactor 26 being within a preselected range.

The ammonia in reservoir 34 is, for example, either anhydrous ammonia or an aqueous solution of ammonia and is pressurized within the reservoir 34 at about 690 kpa to maintain the ammonia in the liquid phase at ambient temperatures. The reservoir 34 is connected by a line 40 to an inlet 42 of ammonia pump 36.

The ammonia pump 36 is, for example, similar in construction to the fuel injection pumps 12 although the ammonia pump 36 differs in that it develops a relatively lower pressure and also has a relatively smaller pumping displacement which is sized in a preselected proportion to the total fuel mass flow rate delivered by the fuel injection pumps 12. Depending on the type of engine, type of fuel burned, type of reactor 26 selected, and amount of nitrogen oxide removal desired, the pumping displacement of the ammonia pump 36 is sized to meter and pump ammonia in an amount of between about 0.2 to 10% of the total fuel mass flow rate supplied by the fuel injection pumps 12. For the particular engine illustrated in Fig. 1, using a hydrogen exchanged mordenite zeolite catalyst bed 28, I have determined ammonia metered in the proportion of about 1% of the total fuel mass flow rate supplied results in about an 80% reduction of nitrogen oxides when compared to the untreated combusted gas stream. Both the fuel injection pumps 12 and the ammonia pump 36 are actuated by the camshaft 20, which rotates in preselected proportion to engine speed, and controlled by the fuel pump rack 16 so that the proper amount of ammonia is reliably and instantaneously metered according to the fuel mass flow rate. By accurately metering the proper amount of ammonia this way, the supply of ammonia is thereby conserved.

Since ammonia has poor lubricating qualities compared to conventional diesel fuel, suitable lubrication for the ammonia pump 36 may be provided by any of the well known lubricating systems such as those disclosed in, for example, US—A—2,010,696 or US—A—2,278,395.

A pumping outlet 44 of the ammonia pump 36 is connected by a line 46 to a relatively low-pressure normally-closed injection nozzle or check valve 48. The injection nozzle 48 is connected to the conduit 24 and sprays liquid ammonia into the conduit 24 each time the ammonia pump 36 develops, for example, about 1400 kpa. The above valve opening pressure of injection nozzle 48 may be any minimum pressure which maintains the ammonia in the liquid phase, throughout the ammonia metering means 32, and yet sufficiently disperses the liquid ammonia into the combusted gas stream in the conduit 24 where the liquid ammonia vaporizes.

In order to speed up the catalytic or, alternatively, thermal reaction between the ammonia and nitrogen oxides, it is well known to also provide a small amount of unburnt oxygen, at least about 1%, in the combusted gas stream. In the case of a spark-ignited engine the unburnt oxygen is provided, for example, by either adjusting the engine to a lean fuel setting or supplying an auxiliary supply of air to the conduit 24. In the case of a diesel engine, the unburnt oxygen is inherently provided in the combusted gas stream in an amount between about 1 to 20% which adequately speeds the reaction.

The ammonia supplying means 38 includes a means 50 for sensing the temperature of the combusted gas stream in the reactor 26 and a normally-closed valve 60 connected to the temperature sensing means 50. The valve 60 is interposed in line 40, between the ammonia reservoir 34 and ammonia pump 36, and is movable between a first or closed position at which the valve 60 blocks the supply of ammonia to the conduit 24 and a second or open position at which the valve 60 communicates the supply of ammonia to the conduit 24. The valve 60 is moved to the second or open position in response to the sensed temperature being within a preselected range. The valve 60 is, for example, a solenoid-controlled valve which is normally biased to the first or closed position.

The temperature sensing means 50 includes, for example, a temperature sensor 52, such as a thermocouple, and a minimum-maximum power amplifier 56. The temperature sensor 52 is attached to the reactor 26 and also connected by way of a signal line 54 to the minimum-maximum power amplifier 56. The amplifier is connected by way of a signal line 58 to the valve 60. The temperature sensor 52 is adapted to provide a temperature signal, $S_1$, responsive to the temperature of the combusted gas stream within the reactor 26. The temperature sensor 52 transmits its signal, $S_1$, by way of signal line 54 to the minimum-maximum power amplifier 56 which is preset for determining whether the sensed temperature is within a preferred range for the particular reactor 26 used.

In the event that the signal, $S_1$, indicates that the particular reactor 26 is either too cold or too hot to make beneficial use of the ammonia in reducing nitrogen oxides, the minimum-maximum power amplifier 56 does not transmit any signal by way of signal line 58 and the valve 60 remains closed thus conserving the supply of ammonia in the reservoir 34. In the event that the signal, $S_1$, indicates that the particular reactor 26 is operating within a temperature range where the use of ammonia is beneficial for reducing nitrogen oxides, the minimum-maximum power amplifier 56 transmits an actuating signal, $S_2$, by way of signal line 58 to the valve 60 which causes the valve 60 to open and communicate the flow of ammonia from the reservoir 34 to the ammonia pump 36.

Alternatively, the temperature sensing means 50 may, for example, include a thermostat (not shown) which is mechanically or electrically linked to the valve 60.

Regardless of what type of ammonia supplying means 38 is chosen, when a catalytic reactor 26 is used, the valve 60 is moved to the second or open position only when the sensed temperature is generally in the range of about 50 to 800°C. For example, for metal or metal oxide catalyst beds 28, the preferred temperature range is about 100 to 600°C and, more particularly, about 150 to 550°C for a vanadium pentoxide composition. Moreover, for zeolite catalyst beds 28, the preferred temperature range is about 100 to 800°C and, more particularly about 250 to 800°C for a hydrogen exchanged mordenite zeolite composition.

In Fig. 4 the amount of ammonia metered is electronically determined in proportion to the fuel mass flow rate. The embodiment of Fig. 4 departs from the embodiment of Fig. 3 in that, in lieu of using liquid ammonia, the ammonia pump 36, the minimum-maximum power amplifier 56, and the valve 60, the ammonia metering means 32' includes a normally-closed throttling valve 72, a pressurized reservoir 34 of gaseous ammonia, a means 62 for sensing the position of the fuel rack 16 and providing a representative signal, $S_3$, which directly relates to the quantity of total fuel supplied per engine revolution, and a means 66 for simultaneously sensing the engine speed and providing a representative signal, $S_4$. The ammonia metering means 32' of Fig. 4 further includes a directing means 70, such as a logic system power amplifier, for receiving the rack position signal, $S_3$, by way of signal line 64 and the engine speed signal, $S_4$, by way of signal line 68 and performing appropriate calculation to reliably and instantaneously determine the fuel mass flow rate. The logic system power amplifier 70 also receives the temperature signal, $S_1$, from the temperature sensing means 50 by way of signal line 54.

Valve 72 differs from the valve 60 of Fig. 3 only in that its second or open position is variable and is connected to the logic system power amplifier 70 by way of a signal line 74. In the event that the temperature signal, $S_1$, indicates that the particular reactor 26 is either too hot or too cold to make beneficial use of the ammonia in reducing nitrogen oxides, the logic system power amplifier 70 will not transmit any signal by way of the signal line 74 and the throttling valve 72 will remain closed thus conserving the supply of ammonia in reservoir 34. In the event that the temperature signal, $S_1$, indicates that the particular reactor 26 is operating within a temperature range where the use of ammonia effectively reduces nitrogen oxides, the logic system power amplifier 70 emits a signal, $S_5$, by way of the signal line 74, which modulates the throttling valve 72 at its variably second or open position thereby reliably and instantaneously metering the amount of gaseous ammonia supplied, by way of line 76, to the conduit 24 in a preselected proportion to the fuel mass flow rate.

Throttling valve 72 is biased in the first or closed position and is, for example, a solenoid-controlled multiplicity of orifices which can be selectively opened and closed in various combinations to provide a very reliable, variably step control of the ammonia flow rate. Alternatively, the throttling valve 72 may be an infinitely variable butterfly valve.

Although the engine speed sensor means 66 in Fig. 4 is shown sensing speed at the engine flywheel 78, it may be located to sense engine speed elsewhere, such as the flyweight carrier of the governor 18 or at the camshaft 20 of the fuel injection pump 12 without departing from the scope of the invention.

Alternatively, the fuel rack position sensor means 62 and engine speed sensor means 66 may be replaced by a conventional fuel flow rate sensor means (not shown) which directly and instantaneously measures fuel mass flow rate and emits a representative signal to the logic system power amplifier 70 which then directs the throttling valve 72 to meter the preselected proportional amount of ammonia supplied to conduit 24.

Industrial Applicability

Having determined that the amount of nitrogen oxides produced in the combusted gas stream is substantially directly proportional to the amount of fuel mass flow rate supplied to the engine combustion chambers 14, the invention meters ammonia to the combusted gas stream in a preselected proportion to the fuel mass flow rate in order to efficiently reduce the amount of noxious nitrogen oxides.

In the embodiment shown in Fig. 3, the speed of camshaft 20 and the position of the fuel pump rack 16 of the fuel pumps 12 determine the fuel mass flow rate supplied to the engine combustion chambers. Since the amount of liquid ammonia pumped by the ammonia pump 36 is also determined by the camshaft speed and the position of the fuel pump rack 16, the correct preselected proportion of ammonia to the fuel mass flow rate is reliably and instantaneously metered. As long as the temperature of the combusted gas stream within the reactor 26 normally falls within the preselected temperature range where the introduction of ammonia is beneficial, the temperature signal, $S_1$, from temperature sensor 52 causes the minimum-maximum power amplifier 56 to emit an actuating signal, $S_2$, to move the normally-closed valve 60 to its second or open position where the valve 60 communicates the liquid ammonia supply to the ammonia pump 36, and thence to the conduit 24. Should the temperature of the combusted gas stream within the reactor 26 fall outside the preselected temperature range so that the introduction of ammonia is not beneficial, the minimum-maximum power amplifier 56 will not emit an actuating signal, $S_2$, to the valve 60 and the valve 60 will move to its first or closed position thereby conserving the supply of liquid ammonia.

In the alternate embodiment of Fig. 4, the fuel rack position sensor means 62 and the engine speed sensor means 66 provide representative input signals, $S_3$ and $S_4$, to the logic system power amplifier 70 which performs appropriate calculation to reliably and instantaneously determine the amount of fuel mass flow rate and the corresponding proportional amount of ammonia required to remove nitrogen oxides from the combusted gas stream. The logic system power amplifier 70 then emits a modulating signal, $S_5$, to move the normally-closed throttling valve 72 to its variable second or open position at which the valve meters the amount of gaseous ammonia being introduced in conduit 24 in a preselected proportion to the fuel mass flow rate. Should the temperature of the combusted gas stream within the reactor 26 fall outside the preselected temperature range so that the introduction of ammonia is not beneficial, the temperature signal, $S_1$, from temperature sensor 52 causes the logic system power amplifier to not transmit any modulating signal to the throttling valve 72 which then moves to its first or closed position thereby blocking and conserving the supply of gaseous ammonia.

In one embodiment of the present invention in which a hydrogen exchanged mordenite zeolite catalyst was used, ammonia supplied in the proportion of about 1% of the total fuel mass flow rate supplied resulted in about an 80% reduction of nitrogen oxides from the exhaust gas stream.

In summary, this invention reliably and instantaneously meters the correct amount of ammonia to the combusted gas stream in a preselected proportion to the fuel mass flow rate in order to efficiently reduce the amounts of noxious nitrogen oxides.

**Claims**

1. A method of reducing the amounts of oxides of nitrogen contained in a combusted gas stream from an engine combustion chamber, the method comprising the steps of conducting the combusted gas stream to a reactor; and metering ammonia to the combusted gas stream at a location between the combustion chamber and the reactor; characterised in that the ammonia is metered in a preselected proportion to the fuel mass flow rate supplied to the engine combustion chamber as determined from engine speed and a setting of a fuel pump quantity control means.

2. The method as in claim 1, wherein the fuel pump quantity control means is a fuel pump rack.

3. The method as in claim 2, wherein the step of metering the ammonia includes pumping the ammonia to the combusted gas stream at the location.

4. The method in claim 3, wherein the step of metering ammonia includes maintaining the ammonia in the liquid phase.

5. The method of claim 2, wherein the step of metering ammonia includes sensing the position of the fuel pump rack and providing a representative signal; sensing the engine speed and providing a representative signal; computing the fuel mass flow rate supplied to the engine combustion chamber from the fuel rack position signal and the engine speed signal; and metering the ammonia to the location in a preselected proportion to the computed fuel mass flow rate.

6. The method as in claim 5, wherein the step of metering ammonia includes maintaining the ammonia in a gaseous phase.

7. The method of claim 1, wherein the preselected proportion is about 0.2 to 10 percent.

8. The method of claim 1, wherein the step of metering ammonia includes the steps of sensing the temperature of the combusted gas stream in the reactor; and supplying the ammonia to the combusted gas stream at the location only in response to the sensed temperature being within a preselected range.

9. The method as in claim 8, wherein the reactor is a catalytic reactor.

10. The method as in claim 9, wherein the preselected temperature range is between 50 and 800°C.

11. An emission control system for carrying out the method, according to any one of the preceding claims, of reducing the oxides of nitrogen contained in a combusted gas stream from a combustion chamber (14) of an internal combustion engine (10), the system comprising a reactor (26); a conduit (24) connected between the combustion chamber (14) and the reactor (26); and means (32) for metering the ammonia to the conduit (24); characterised in that the metering means (32) is responsive to engine speed and to a setting of a fuel pump quantity control means (16) of the engine.

12. The emission control system as in claim 11, wherein the fuel pump quantity control means (16) is a fuel pump rack.

13. The emission control system as in claim 12, wherein the ammonia metering means (32) includes a reservoir of ammonia (34); and an ammonia pump (36) connected between the ammonia reservoir (34) and the conduit (24) and controlled by the position of the fuel pump rack (16) and the speed of the engine (10).

14. The emission control system as in claim 13, wherein the ammonia metering means (32) includes an injection nozzle 48 connected between the ammonia pump (36) and the conduit (24).

15. The emission control system as in claim 14, wherein the ammonia metering means is arranged to supply the ammonia to the conduit (24) in a liquid phase.

16. The emission control system as in claim 12, wherein the ammonia metering means (32) includes a reservoir (34) of ammonia; a throttling valve (72) connected between the reservoir (34) and the conduit (24); means (62) for sensing the position of the fuel pump rack (16) and providing a representative signal ($S_3$); means (66) for simultaneously sensing the speed of the engine (10) and providing a representative signal ($S_4$); and means (70) for directing a modulating signal ($S_5$) to the throttling valve (72) in response to the rack position signal ($S_3$) and engine speed signal ($S_4$).

17. The emission control system as in claim 16, wherein the ammonia metering means is arranged to supply the ammonia to the conduit (24) in a gaseous phase.

18. The emission control system as in claim 11, wherein the preselected proportion is about 0.2 to 10 percent.

19. The emission control system as in claim 11, wherein the ammonia metering means (32) includes means (38) for supplying ammonia to the conduit (24) only in response to the temperature of the combusted gas stream in the reactor (26) being within a preselected temperature range.

20. The emission control system as in claim 19, wherein the ammonia supplying means (38) includes means (50) for sensing the temperature of the combusted gas stream in the reactor (26); and a valve (60, 72) connected to the temperature sensing means (50) and interposed between the reservoir (34) and the conduit (24), the valve (60, 72) being movable between a first or closed position at which the valve (60, 72) blocks the supply of ammonia to the conduit (24) and a second or open position at which the valve (60, 72) communicates the supply of ammonia to the conduit (24), the valve (60, 72) being moved to the second or open position in response to the sensed temperature being within a preselected range.

21. The emission control system as in claim 20, wherein the second or open position of the valve (72) is a variable position.

22. The emission control system as in claim 20, wherein the reactor (26) is a catalytic reactor.

23. The emission control system as in claim 22, wherein the preselected temperature range is about 50 to 800°C.

**Patentansprüche**

1. Verfahren zur Verminderung der Stickoxidmengen in dem Verbrennungsgasstrom einer Motorverbrennungskammer, wobei das Verfahren folgende Schritte aufweist: Leiten des Verbrennungsgasstroms zu einem Reaktor und Zumessen von Ammoniak zum Verbrennungsgasstrom an einer Stelle zwischen der Verbrennungskammer und dem Reaktor, dadurch gekennzeichnet, daß das Ammoniak in einer vorgewählten Proportion der Brennstoffmassenströmungsrate, geliefert an die Motorverbrennungskammer, zugemessen wird, und zwar entsprechend der Bestimmung durch die Motordrehzahl und einer Einstellung von Brennstoffpumpenmengensteuermitteln.

2. Verfahren nach Anspruch 1, wobei die Brennstoffpumpen-Mengensteuermittel eine Brennstoffpumpen-Zahnstange sind.

3. Verfahren nach Anspruch 2, wobei der Schritt des Zumessens des Ammoniaks das Pumpen des Ammoniaks zu dem Verbrennungsgasstrom an der Stelle umfaßt.

4. Verfahren nach Anspruch 3, wobei der Schritt des Zumessens des Ammoniaks die Aufrechterhaltung des Ammoniaks in der flüssigen Phase umfaßt.

5. Verfahren nach Anspruch 2, wobie der Schritt der Zumessens des Ammoniaks das Abfühlen der Position der Brennstoffpumpen-Zahnstange umfaßt und das Vorsehen eines repräsentativen Signals, wobei die Motordrehzahl abgefühlt wird und ein repräsentatives Signal erzeugt wird, und wobei schließlich die Brennstoffmassenströmungsrate, geliefert an die Motorverbrennungskammer, berechnet wird, und zwar aus dem Brennstoffstangen-Positionssignal und dem Motordrehzahlsignal, und Zumessung des Ammoniaks zu der Stelle in einer vorgewählten Proportion zu der berechneten Brennstoffmassenströmungsrate.

6. Verfahren nach Anspruch 5, wobei der Schritt des Zumessens des Ammoniaks des Beibehalten des Ammoniaks in der Gasphase umfaßt.

7. Verfahren nach Anspruch 1, wobei die ausgewählte Proportion von ungefähr 0,2 bis 10 % beträgt.

8. Verfahren nach Anspruch 1, wobei der Schritt der Zumessung des Ammoniaks die Schritte des Abfühlens der Temperatur des Verbrennungsgasstroms im Reaktor umfaßt, und Lieferung des Ammoniaks an den verbrannten Gasstrom an der Stelle nur infolge der innerhalb eines vorgewählten Bereichs befindlichen abgefühlten Temperatur.

9. Verfahren nach Anspruch 8, wobei der Reaktor ein katalytischer Reaktor ist.

10. Verfahren nach Anspruch 9, wobei der vorgewählte Temperaturbereich zwischen 50 und 800°C liegt.

11. Emissionssteuersystem zur Ausführung des Verfahrens nach einem der vorhergehenden Ansprüche zum Reduzieren der in einem Verbrennungsgasstrom von einer Verbrennungskammer (14) eines Verbrennungsmotors (10) enthaltenden Stickstoffoxide, wobei das System folgendes aufweist: einen Reaktor (26), eine Leitung (24) verbunden zwischen Verbrennungskammer (14) und Reaktor (26), und Mittel (32) zum Zumessen des Ammoniaks zur Leitung (24), dadurch gekennzeichnet, daß die Zumeßmittel (32) auf die Motordrehzahl ansprechen und auf eine Einstellung von Brennstoffpumpenmengen-Steuermitteln (16) des Motors.

12. Emissionssteuersystem nach Anspruch 11, wobei die Brennstoffpumpenmengen-Steuermittel (16) eine Brennstoffpumpen-Zahnstange sind.

13. Emissionssteuersystem nach Anspruch 12, wobei die Ammoniak-Zumeßmittel (32) ein Reservoir von Ammoniak (34) aufweisen und eine Ammoniakpumpe (36), die zwischen dem Ammoniak-Reservoir (34) und der Leitung (24) liegt, und zwar gesteuert durch die Position der Brennstoffpumpen-Zahnstange (16) und der Drehzahl des Motors (10).

14. Emissionssteuersystem nach Anspruch 13, wobei die Ammoniak-Zumeßmittel (32) eine Einspritzdüse (48) aufweisen, die zwischen der Ammoniakpumpe (36) und der Leitung (24) liegt.

15. Emissionssteuersystem nach Anspruch 14, wobei die Ammoniak-Zumeßmittel derart ausgelegt sind, daß das Ammoniak der Leitung (24) in einer flüssigen Phase zugeführt wird.

16. Emissionssteuersystem nach Anspruch 12, wobei die Ammoniak-Zumeßmittel (32) ein Reservoir (34) von Ammoniak aufweisen, ein Drosselventil (72) verbunden zwischen Reservoir (34) und der Leitung (24), Mittel (62) zum Abfühlen der Position der Brennstoffpumpenstange (16) und zum Vorsehen eines entsprechenden Signals ($S_3$), Mittel (66) zum gleichzeitigen Abfühlen der Drehzahl des Motors (10) und zum Vorsehen eines entsprechenden Signals ($S_4$), und Mittel (70) zum

Leiten eines Moduliersignals (S₄) zu dem Drosselventil (72) infolge des Zahnstangen-Positionssignals (S₃) und des Motordrehzahlsignals (S₄).

17. Emissionssteuersystem nach Anspruch 16, wobei die Ammoniak-Zumeßmittel derart angeordnet sind, daß das Ammoniak der Leitung (24) in einer gasförmigen Phase zugeführt wird.

18. Emissionssteuersystem nach Anspruch 11, wobei die vorgewählte Proportion ungefähr 0,2 bis 10 % beträgt.

19. Emissionssteuersystem nach Anspruch 11, wobei die Ammoniak-Zumeßmittel (32) Mittel (38) aufweisen, um Ammoniak der Leitung (24) zuzuführen, und zwar nur infolge der Temperatur des verbrannten Gasstroms im Reaktor (26), der innerhalb eines vorgewählten Temperaturbereichs liegt.

20. Emissionssteuersystem nach Anspruch 19, wobei die Ammoniak-Versorgungsmittel (38) Mittel (50) zum Abfühlen der Temperatur des Verbrennungsgasstroms im Reaktor (26) aufweisen, und wobei ein Ventil (60, 72) mit den Temperaturabfühlmitteln (50) verbunden ist, und zwar zwischen dem Reservoir (34) und der Leitung (24), wobei das Ventil (60, 72) zwischen einer ersten oder geschlossenen Position und einer zweiten oder offenen Position bewegbar ist, wobei in der ersten Position das Ventil (60, 72) die Ammoniakversorgung zur Leitung (24) blockiert, während in der zweiten Position das Ventil (60, 72) die Ammoniakversorgung mit der Leitung (24) verbindet, wobei das Ventil (60, 72) in die zweite oder offene Position bewegt wird, und zwar infolge der innerhalb eines vorgewählten Bereichs liegenden abgefühlten Temperatur.

21. Emissionssteuersystem nach Anspruch 20, wobei die zweite oder offene Position des Ventils (72) eine variable Position ist.

22. Emissionssteuersystem nach Anspruch 20, wobei der Reaktor (26) ein katalytischer Reaktor ist.

23. Emissionssteuersystem nach Anspruch 22, wobei der vorgewählte Temperaturbereich ungefähr 50 bis 800°C beträgt.

**Revendications**

1. Procédé pour réduire les quantités d'oxydes d'azote contenues dans un flux de gaz brûlés provenant d'une chambre de combustion d'un moteur, procédé comprenant les étapes consistant à conduire ledit flux de gaz brûlés dans un réacteur; à doser de l'ammoniac dans ledit flux de gaz brûlés en un point situé entre ladite chambre de combustion et ledit réacteur; caractérisé en ce que l'ammoniac est dosé dans une proportion prédéterminée par rapport au débit massique du carburant introduit dans ladite chambre de combustion du moteur, tel qu'il est déterminé par la vitesse du moteur et par un réglage d'un moyen de commande du débit de la pompe à carburant.

2. Procédé selon la revendication 1, dans lequel ledit moyen de commande du débit de la pompe à carburant est une crémaillère de pompe à carburant.

3. Procédé selon la revendication 2, dans lequel ladite étape consistant à doser l'ammoniac comprend le pompage de l'ammoniac dans ledit flux de gaz brûlés audit point.

4. Procédé selon la revendication 3, dans lequel ladite étape consistant à doser l'ammoniac comprend le maintien de l'ammoniac dans sa phase liquide.

5. Procédé selon la revendication 2, dans lequel ladite étape consistant à doser l'ammoniac comprend la detection de la position de ladite crémaillère de pompe à carburant et la délivrance d'un signal représentatif; la détection de la vitesse du moteur et la délivrance d'un signal représentatif; le calcul du débit massique du carburant introduit dans ladite chambre de combustion du moteur à partir dudit signal de position de ladite crémaillère de carburant et dudit signal de vitesse du moteur; et le dosage de l'ammoniac audit point dans une proportion prédéterminée par rapport au débit massique calculé de carburant.

6. Procédé selon la revendication 5, dans lequel ladite étape consistant à doser l'ammoniac comprend le maintien de l'ammoniac dans sa phase gazeuse.

7. Procédé selon la revendication 1, dans lequel ladite proportion prédéterminée est d'environ 0,2 à 10 pourcent.

8. Procédé selon la revendication 1, dans lequel ladite étape consistant à doser l'ammoniac comprend les étapes consistant à détecter dans ledit réacteur la température du flux de gaz brûlés; et l'apport de l'ammoniac dans ledit flux de gaz brûlés audit point uniquement en réponse à la présence de ladite température détectée dans une plage prédéterminée.

9. Procédé selon la revendication 8, dans lequel ledit réacteur est un réacteur catalytique.

10. Procédé selon la revendication 9, dans lequel ladite plage de température prédéterminée est comprise entre 50 et 800°C.

11. Dispositif de commande d'émission pour mettre en oeuvre le procédé selon l'une quelconque des revendications précédentes pour réduire les oxydes de l'azote contenus dans un flux de gaz brûlés provenant d'une chambre de combustion (14) d'un moteur à combustion interne (10), ledit dispositif comprenant un réacteur (26); une conduite (24) reliée entre la chambre à combustion (14) et le réacteur (26); et un moyen (32) pour doser l'ammoniac dans la conduite (24), caractérisé en ce que ledit moyen de dosage (32) est sensible à la vitesse du moteur et à un réglage d'un organe de commande (16) du débit de la pompe à carburant du moteur.

12. Dispositif de commande d'émission selon la revendication 11, dans lequel ledit organe de commande (16) du débit de la pompe à carburant est une crémaillère de pompe à carburant.

13. Dispositif de commande d'émission selon la revendication 12, dans lequel ledit moyen de dosage (13) de l'ammoniac comprend un réservoir d'ammoniac (34); et une pompe à ammoniac (36) reliée entre ledit réservoir à ammoniac (34) et ladite conduite (24), et commandée par la position de la crémaillère (16) de pompe à carburant et par la vitesse du moteur (10).

14. Dispositif de commande d'émission selon la revendication 13, dans lequel ledit moyen de dosage (32) de l'ammoniac comporte une buse d'injection (48) reliée entre ladite pompe à ammoniac (36) et ladite conduite (24).

15. Dispositif de commande d'émission selon la revendication 14, dans lequel ledit moyen de dosage de l'ammoniac est conçu pour apporter dans ladite conduite (24) l'ammoniac dans sa phase liquide.

16. Dispositif de commande d'émission selon la revendication 12, dans lequel le moyen de dosage (32) d'ammoniac comporte un réservoir (34) d'ammoniac; une valve d'étranglement (72) reliée entre ledit réservoir (34) et ladite conduite (24); un moyen (62) pour détecter la position de ladite crémaillère (16) de pompe à carburant et pour délivrer un signal représentatif ($S_3$); un moyen (66) pour détecter simultanément la vitesse du moteur (10) et pour délivrer un signal représentatif ($S_4$); et un moyen (70) pour diriger un signal de modulation ($S_5$) vers ladite valve d'étranglement (72) en réponse audit signal ($S_3$) de position de la crémaillère et audit signal ($S_4$) de vitesse du moteur.

17. Dispositif de commande d'émission selon la revendication 16, dans lequel ledit moyen de dosage de l'ammoniac est conçu pour apporter dans ladite conduite (24) l'ammoniac dans sa phase gazeuse.

18. Dispositif de commande d'émission selon la revendication 11, dans lequel ladite proportion prédéterminée est d'environ 0,2 à 10 pour cent.

19. Dispositif de commande d'émission selon la revendication 11, dans lequel ledit moyen de dosage (32) de l'ammoniac comporte un moyen (38) pour apporter l'ammoniac dans ladite conduite (24) uniquement en réponse à la présence de la température du flux de gaz brûlés détectée dans le réacteur (26) dans une plage de température prédéterminée.

20. Dispositif de commande d'émission selon la revendication 19, dans lequel ledit moyen (38) apportant l'ammoniac comporte un moyen (50) pour détecter la température dans le réacteur (26) du flux de gaz brûlés; et une valve (60, 72) reliée audit moyen (50) de détection de la température et interposée entre ledit réservoir (34) et ladite conduite (24), la valve (60, 72) étant déplaçable entre une première position ou position fermée dans laquelle la valve (60, 72) bloque l'apport d'ammoniac dans la conduite (24), et une seconde position ou position ouverte dans laquelle la valve (60, 72) met en communication ledit apport d'ammoniac avec la conduite (24), la valve (60, 72) étant amenée dans sa seconde position ou position ouverte en réponse à la présence de la température détectée dans une plage prédéterminée.

21. Dispositif de commande d'émission selon la revendication 20, dans lequel ladite seconde position ou position ouverte de la valve (72) est une position variable.

22. Dispositif de commande d'émission selon la revendication 20, dans lequel ledit réacteur (26) est un réacteur catalytique.

23. Dispositif de commande d'émission selon la revendication 22, dans lequel ladite plage de température prédéterminée est d'environ 50 à 800°C.

FIG.1

FIG.2

FIG 3

FIG 4